# EUROPEAN PATENT APPLICATION

(11) **EP 4 163 443 A1**
(43) Date of publication of application: **12.04.2023**
(21) Application number: 21306411.6
(22) Date of filing: 07.10.2021
(51) Int. Cl.: E02D 27/42

(54) **ASSEMBLY FOR PRODUCING OFFSHORE ELECTRICITY COMPRISING A WIND TURBINE AND PROCESS FOR BUILDING SUCH AN ASSEMBLY**

(71) Applicant: TotalEnergies OneTech, 92400 Courbevoie (FR)
(72) Inventor: BOUNHOURE, François, 78290 CROISSY SUR SEINE (FR)
(74) Representative: Lavoix

(57) **Abstract**

An assembly for producing offshore electricity comprising:
- a wind turbine, and
- a monopile extending along an axis (V) for fully supporting the wind turbine, the monopile comprising a lower end (38) for penetrating in a seabed (16), the lower end comprising an outer tube (52) and defining an interior volume (54).

The lower end comprises:
- an inner tube (56) extending in the interior volume and defining a lower opening (58), the inner tube and the outer tube defining an annular volume,
- a closure plate (60) welded on the inner tube and closing the lower opening, and
- wing plates (62) extending in the annular volume and welded on the inner tube and on the outer tube, the wing plates defining a plurality of compartments extending along the axis and defining lower entries (72) adapted for allowing part of the seabed to enter the compartments.

## Description

The present invention deals with an assembly for producing offshore electricity comprising a wind turbine.

It also deals with a method of building such an assembly.

As of today, most of the offshore bottom-fixed wind turbines comprises either a monopile or a jacket on which the tower of the turbine is fixed. To a lesser extent, there are also some examples of gravity based structures (GBS).

Jackets are made of steel tubes welded together and having a typical diameter between 0.5 and 1.5 m. They are able to withstand large efforts both horizontally and vertically, and allow accessing large water depths. However, jackets have to be tailor made and are rather expensive, especially for serial fabrication and installation.

Monopiles are recognized by the offshore wind industry as an economical bottom-fixed concept for serial installation of wind turbines, and are therefore preferred whenever possible. Their cost per installed MW can be significantly less than that of a jacket, for which supply chain and manufacturing process are completely different.

Monopiles have however their own limitations. First, the maximum diameter that can be efficiently obtained is currently around 10 to 11m. As a result, due to their relative slenderness, monopiles are limited to shallow areas, and are generally not competitive with jackets above 30-40m water depths, depending on available installation vessels, soil and local weather conditions. The largest/longest monopiles are also heavy and difficult to handle onshore and to transport to the offshore site, and finally challenging to install by either driving or drilling/grouting.

In order to withstand horizontal efforts applied by the wind on the wind turbines and/or by waves and currents, and vertical efforts due to the wind turbine weight and the monopile weight, a certain depth of penetration of the monopile is required, depending on the underground properties.

Very recently, it was proposed to use a structure anchored in the seabed and surrounding the monopile in order to guide the monopile without vertical friction. Such a structure helps the assembly to withstand the horizontal efforts. It allows reducing the depth of penetration, to some extent, and the diameter of the monopile. However, the vertical efforts still remain.

As the vertical capacity of the monopile is mainly due to friction between the underground and the outer and inner periphery of the monopile, a certain depth of penetration remains needed.

As a variant, the monopile can comprise a suction bucket, but it may not be suitable for any soil conditions, especially hard soil layers.

Besides, in case the assembly is located in a seismic region, an earthquake may partially liquefy the soil, with an important reduction of the friction. As a consequence, an extra depth of penetration may be needed to prevent the monopile from sinking or falling.

For the above reasons, depending on local conditions (water depth, soil characteristics, seismicity), a monopile cannot be used, or can be used but will remain expensive, with a negative impact on the electricity cost.

An aim of the invention is to reduce the cost of offshore electricity.

To this end, the invention proposes an assembly for producing offshore electricity comprising:
- a wind turbine, and
- a monopile extending along an axis intended to be vertical, and adapted for fully supporting the wind turbine, the monopile comprising a lower end adapted for penetrating in a seabed, the lower end comprising an outer tube centered on the axis and defining an interior volume of the monopile,
the lower end further comprising:
- an inner tube centered on the axis and extending in the interior volume, the inner tube defining a lower opening perpendicular to the axis, and the inner tube and the outer tube defining an annular volume,
- a closure plate welded on the inner tube and closing the lower opening, and
- a plurality of wing plates extending in the annular volume and welded on the inner tube and on the outer tube, the wing plates defining a plurality of compartments in the annular volume, the compartments respectively extending along the axis and defining lower entries adapted for allowing part of the seabed to enter the compartments.

In other embodiments, the assembly comprises one or several of the following features, taken in isolation or any technically feasible combination:
- the wing plates respectfully extend in radial planes with respect to the axis and are regularly distributed around the axis;
- said plurality of wing plates consists of a number of wing plates ranging from four to eight;
- each of the wing plates comprises a lowermost edge and an uppermost edge both connecting the outer tube to the inner tube, the lowermost edge and the uppermost edge being inclined with respect to the axis, and getting lower towards the inner tube;
- the outer tube has a radial thickness, the wing plates having a thickness comprised between 40% and 60% of the radial thickness of the outer tube;
- the inner tube has an outside diameter and the outer tube has an outside diameter, and the outside diameter of the inner tube being comprised between 25% and 75% of the outside diameter of the outer tube;
- the inner tube has an axial extension which is smaller than the outside diameter of the outer tube;
- the closure plate has a circular shape;
- the inner tube defines an inner volume, the lower end further comprising stiffening elements located in the inner volume and adapted for stiffening the closing plate with respect to compression along the axis and bending;
- the stiffening elements comprise plates extending throughout the inner volume and forming a grid in axial view;
- the inner tube, the outer tube, the wing plates and the closure plate comprise steel having a yield strength larger than 355 MPa;
- the assembly comprises a subsea jacket comprising:
   - a structure adapted for being anchored in the seabed and surrounding the monopile around the axis, and
   - a central guide fixed on the structure and surrounding the monopile around the axis while being vertically free with respect to the monopile, the structure being adapted for resisting horizontal loads applied by the monopile on the central guide due to bending movements of the monopole;
- the jacket further comprises a lower central guide fixed on the structure and surrounding the monopile around the axis while being vertically free with respect to the monopile, the structure being adapted for resisting horizontal loads applied by the monopile on the lower central guide; and
- the central guide comprises:
   - a ring surrounding the monopile with clearance, and
   - a plurality of friction pads located between the ring and the monopile and angularly distributed around the axis;

The invention also proposes a method of building an assembly as described above, comprising the following steps:
- obtaining the outer tube and the inner tube,
- positioning the inner tube in the interior volume defined by the outer tube, the outer tube being horizontal, and the inner tube being centered on the axis, and
- welding the wing plates on the inner tube and on the outer tube, and welding the closure plate on the inner tube.

The invention and its advantages will be better understood upon reading the following description, given solely by way of example and with reference to the appended drawings, in which:
- Figure 1 is a schematic side view of an assembly according to the invention,
- Figure 2 is a schematic side view of a monopile and a subsea jacket of the assembly shown in Figure 1,
- Figure 3 is a schematic side view of the lower end of the monopole shown in Figures 1 and 2, and
- Figure 4 is a schematic axial view of the lower end shown in Figure 3.

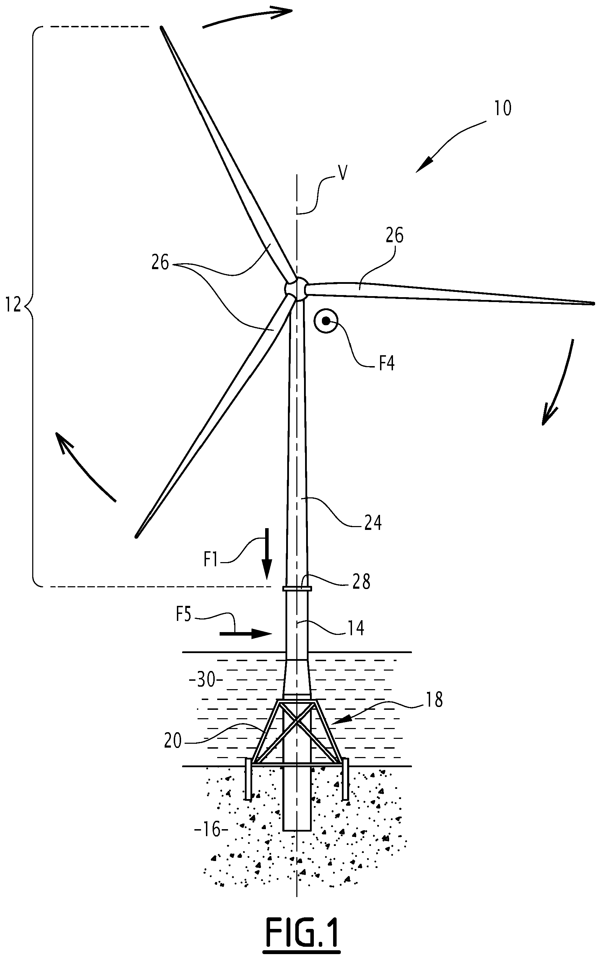

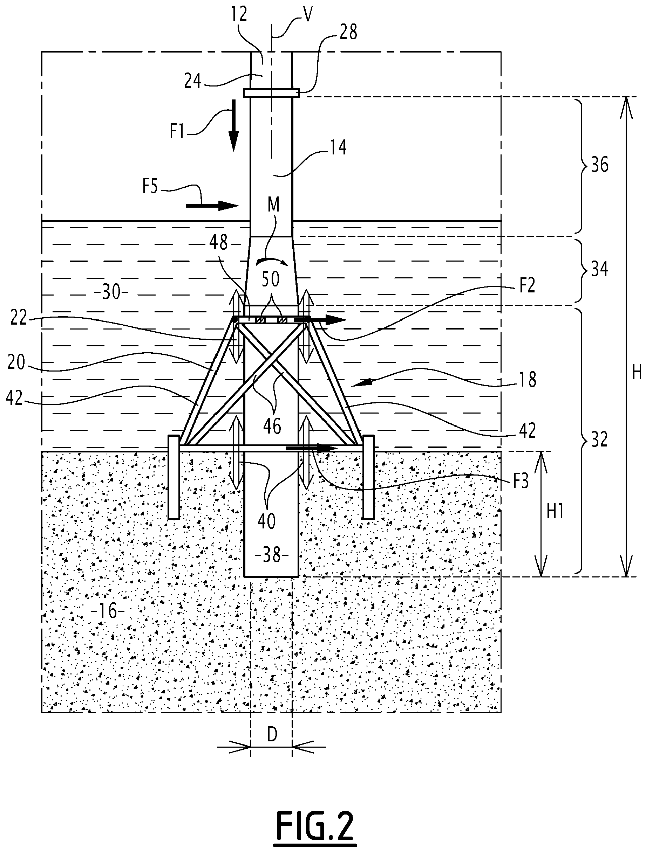

An assembly 10 according to the invention will now be described with reference to Figures 1 and 2. The assembly 10 is adapted for producing offshore electricity.

The assembly 10 comprises a wind turbine 12, and a monopile 14 extending along a vertical axis V and fully supporting the wind turbine, the monopile penetrating in a seabed 16.

Advantageously, the assembly 10 further includes a subsea jacket 18 comprising a structure 20 anchored in the seabed 16 and surrounding the monopile 14 around the axis V, and a central guide 22 (symbolized by double arrows in Figure 2) mechanically connected to the structure 20 and surrounding the monopile 14 around the axis V while being vertically free with respect to the monopile.

The wind turbine 12 comprises a tower 24 fixed to the top of the monopile 14, and blades 26 rotatably mounted on the tower.

Advantageously, the tower 24 has a bolted flange 28 which mechanically connects the wind turbine 12 to the monopile 14.

The monopile 14 is for example surrounded by a body of water 30, for example a sea or a lake.

In the example, the monopile 14 has a lower portion 32 with a cylindrical outer shape, a medium portion 34 with a fustoconical shape, and an upper portion 36 with a cylindrical shape.

For example, the monopile 14 has an average external diameter D ranging from 8.0 to 11.0 meters, and a height H from seabed to top that is greater than 40 meters.

The monopile 14 is adapted for carrying all the weight of the wind turbine 12 and for being the foundation of the wind turbine for vertical loads F1. The monopile 14 is advantageously adapted to transfer horizontal loads F2, F3 and overturning moments M to the jacket 18, or to the seabed in case there is no jacket.

The lower portion 32 forms a lower end 38 which penetrates in the seabed 16 over a height H1 that is advantageously smaller than twice the average external diameter D, thanks to the jacket 18.

The medium portion 34 is for example under the body of water 30, whereas the upper part 36 for example emerges from the body of water 30.

Apart from the structure 20 and the central guide 22, the jacket 18 advantageously comprises a lower central guide 40 (symbolized by double arrows) connected to the structure 20 and surrounding the monopile 14 around the axis V while being vertically free with respect to the monopile.

The jacket 18 is adapted to serve as a guide during installation of the monopile 14, and afterwards adapted to be the foundation of the assembly 10 for the overturning moments M induced by horizontal loads F4 exerted on the wind turbine 12 and wave and current loads F5 exerted on the monopile 14.

In the example, the jacket 18 vertically extends along part of the lower portion 32 of the monopile 14.

The structure 20 is advantageously adapted for resisting the horizontal loads F2, F3 applied by the monopile on the central guide 22, and in the example on the lower central guide 40, due to bending movements of the monopile 14.

The structure 20 for example comprises three or four legs 42 extending along the axis V between the seabed 16 and the central guide 22, and radially with respect to the monopile 14, the legs 42 being angularly distributed around the monopile 14. For example, the structure 20 has a pyramidal shape as seen in a horizontal perspective.

The structure 20 advantageously comprises braces 46 between the legs 42.

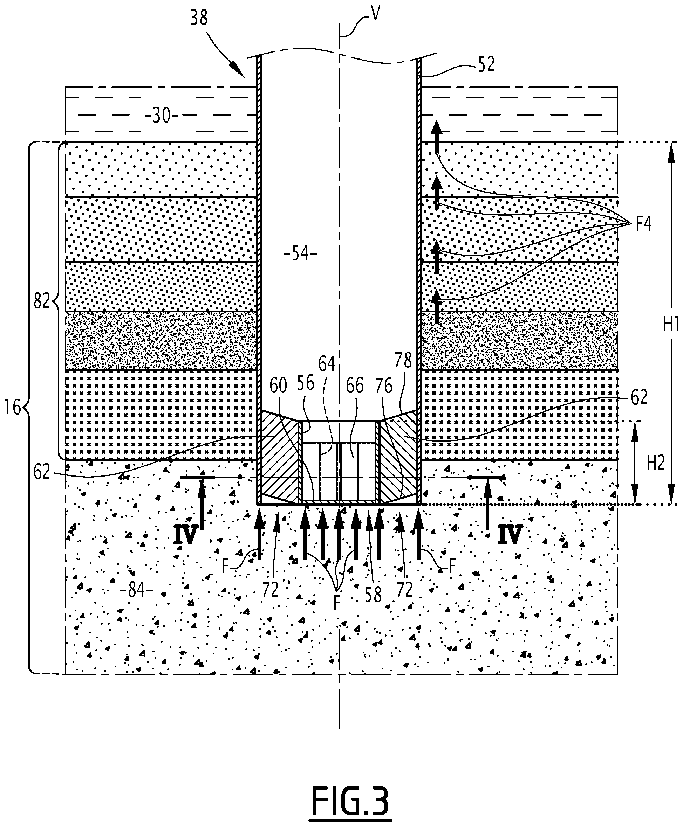

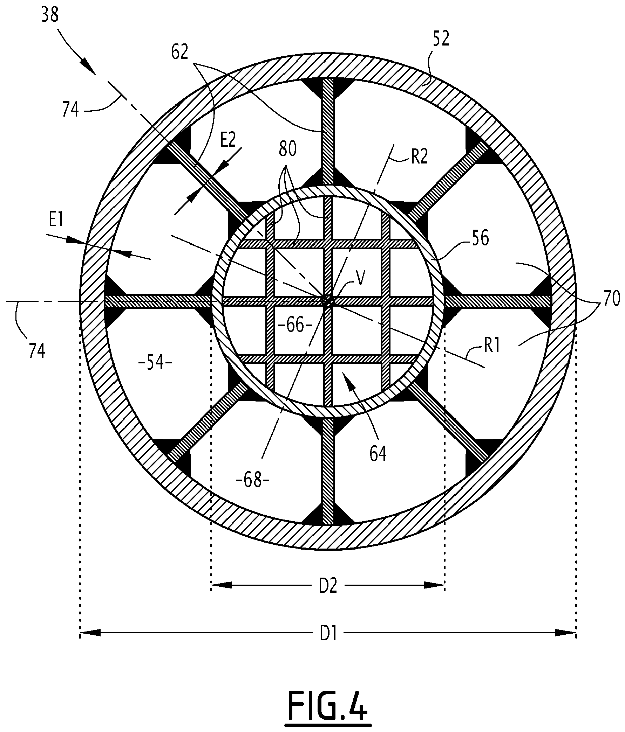

For example, as shown in Figure 3 and 4, the central guide 22 comprises a ring 48 surrounding the monopile 14 with clearance around the axis V.

Advantageously, the central guide 22 comprises a plurality of friction pads 50 located between the ring 48 and the monopile 14 and angularly distributed around the axis V.

The lower central guide 40 is vertically aligned with the central guide 22.

In the example, the lower central guide 40 is structurally analogous to the central guide 22.

As a variant (not shown), the lower central guide 40 may differ from the central guide 22.

The friction pads 50 for example comprises a composite material including a resin, a lubricant, and optionally fibers. Such materials are for example known in themselves under the names Orkot^{®} or Ertalon^{®}.

With reference to Figures 3 and 4, the lower end 38 of the monopile 14 comprises an outer tube 52 centered on the axis V and defining an interior volume 54, and an inner tube 56 also centered on the axis V and extending in the interior volume, the inner tube defining a lower opening 58 perpendicular to the axis V.

The lower end 38 comprise a closure plate 60 welded on the inner tube 56 and closing the lower opening 58, and a plurality of wing plates 62 and welded on the inner tube 56 and on the outer tube 52.

Advantageously, the lower end 38 further comprises stiffening elements 64 located in an inner volume 66 defined by the inner tube.

The inner tube 56 and the outer tube 52 define an annular volume 68 in which the wing plates 62 extend. The inner tube 56 and the outer tube 52 are for example cylindrical.

The outer tube 52 has an outside diameter D1 and the inner tube 56 has an outside diameter D2, the outside diameter D2 being advantageously comprised between 25% and 75% of the outside diameter D1.

The large outside diameter D1 provides easy access to the interior volume 54, which facilitates welding operations.

The inner tube 56 for example has an axial extension H2 which is smaller than the outside diameter D1 of the outer tube 52.

For example, a lowermost part of the inner tube 56 and a lowermost part of the outer tube 52 are located at the same axial level.

The inner tube 56 is closed at its lower side by the closure plate 60, and advantageously open at its upper side in order to avoid hydrostatic pressure on the inner tube 56.

The outer tube 52 has a radial thickness E1. The outer tube 52 forms the outer periphery of the monopile 14 in its lower end 38.

The plurality of wing plates 62 advantageously consists of a number of wing plates ranging typically from four to eight. In the shown example, there are eight wing plates 62.

The wing plates 62 for example define a plurality of compartments 70 in the annular volume 68, the compartments respectively extending along the axis V and defining lower entries 72 adapted (Figure 3) for allowing part of the seabed 16 to enter the compartments.

Advantageously, the wing plates 62 respectfully extend in radial planes 74 with respect to the axis V and are regularly distributed around the axis V.

According to variants (not shown), the wing plates may be oriented not radially. For example, the wing plates may be inclined with respect to the radial planes they cross.

Each of the wing plates 62 comprises a lowermost edge 76 and an uppermost edge 78 both connecting the outer tube 52 to the inner tube 56, the lowermost edge and the uppermost edge being for example inclined with respect to the axis V, and getting lower towards the inner tube.

For example, the wing plates 62 have a thickness E2 comprised between 40% and 60% of the radial thickness E1 of the outer tube 52.

For example, the closure plate 60 has a circular shape. The closure plate 60 does not extend beyond the inner tube 56 radially.

The stiffening elements 64 are adapted to stiffen the closing plate 60 with respect to compression along the axis V and with respect to bending generated by a tip effect (symbolized by arrows F in Figure 3).

The stiffening elements 64 for example comprise plates 80 extending throughout the inner volume 66 and forming a grid in axial view.

In the example, the grid is perpendicular.

In other embodiments (not shown), the stiffening elements may be absent, or may have differents shapes, such as a star-like one, or form a grid with another shape than perpendicular.

The inner tube 56, the outer tube 52, the wing plates 62 and the closure plate 60 for example comprise steel having a yield strength advantageously larger than 355 MPa.

A process for building the assembly 10 will now be described. It comprises the steps of obtaining the outer tube 52 and the inner tube 56, positioning the inner tube 56 in the interior volume 54 defined by the outer tube 52, the outer tube being horizontal, and the inner tube being centered on the axis V. It also comprises a step of welding the wing plates 62 on the inner tube 56 and on the outer tube 52, and welding the closure plate 60 on the inner tube 56.

In the example, the stiffening elements 64 are also added in the inner volume 66.

Previously, in the shown example, the jacket 18 is anchored in the seabed 16.

Then introducing the monopile 14 in the seabed 16 may be realized by driving the monopile 14 with a hydraulic hammer (not represented) or by vibro-driving. To that end, the monopile 14 is brought above the jacket 18 and lowered in a vertical position through the central guide 22. Then the monopile 14 is introduced in the seabed, and the wind turbine 12 is fixed to the monopile.

The lower end 38 easily penetrates through relatively soft layers 82 of the seabed 16. When a relatively harder layer 84 of the seabed is met, then the tip effect, symbolized by arrows F in Figure 3, is exercised by the layer 84 on the closure plate 60.

During the lifetime of the assembly 10, the monopile 14 fully supports the vertical loads F1 created by the weight of the wind turbine 14 and its own weight. The optional jacket 18 does not support these vertical loads at all, since the central guide 22 and the lower central guide 40 are free to move along the axis V with respect to the monopile 14.

The jacket 18 is advantageously able to withstand the horizontal loads F2, F3 and overturning moments M exerted by waves, currents and the wind on the monopile 14. These horizontal loads F2, F3 are received by the central guide 22, and by the lower central guide 40 in the example, and transmitted to the structure 20 of the jacket 18.

The vertical loads F1 are balanced, on the one hand, by friction (symbolized by arrows F4 in Figure 3) on the lower end 38, particularly on the outer periphery of the outer tube 52, and, on the other hand, by the tip effect (symbolized by the arrows F), on the lower end 38, particularly on the closure plate 60.

In case of an earthquake, the soft layers 82 may partly liquefy. However, thanks to the tip effect, the monopile 14 does not sink into the seabed 16.

Thanks to the above features, the cost of offshore electricity is reduced. Indeed, the partially closed lower end 38 allows the tip effect in the hard layer 84. This reduces the depth of penetration H1 of the monopile 14 in the seabed 16, and reduces costs. The costs for manufacturing, transporting and installing the monopile 14 are reduced, by taking advantage of the soil characteristics.

Also, the outside diameter D2 of the inner tube 56 may be adjusted to soil characteristics and tuned to the tip effect magnitude which is seeked for, in particular to avoid excessive tip effect that could lead to driving refusal into the seabed 16.

The stiffening elements 64 advantageously help the monopile 14 to withstand the tip effect.

The axial extension of the wing plates 62 is advantageously designed to allow transferring the tip effect, by shear, from the inner tube 56 to rest of the monopile 14.

Advantage is taken from the large outside diameter D1 of the outer tube 52 (typically 8 to 11m) to facilitate access in the interior volume 54 for welding.

The optional jacket 18 makes it possible to further limit and optimize the penetration H1 of the monopile 14 in the seabed 16, therefore its length and weight, all other things being equal. Another advantage is to limit or reduce the required average external diameter D and the outside diameter D1. With the above features allowing a tip effect, it is possible to fully take advantage of the presence of the jacket 18, because vertical loads F1 are supported by the lower end 38.

By keeping the monopile 14 diameter D within reasonable figures, the assembly 10 also favours a bolted flange 28 between the wind turbine 12 and the monopile 14.

By contributing to keep monopiles within reasonable dimensions, the invention also provides design and installation flexibility against water depth and soil conditions variations over large windfarms sites, thus improving serial fabrication and reducing installation costs.

In general, the invention is adapted to the serial fabrication and installation in windfarm development projects. The invention is also compatible with modern installation vessels, such as Huisman's Windfarms Installation Vessel designed for serial installation of monopiles and wind turbines, reducing logistics and marshalling costs.

## Claims

1. An assembly (10) for producing offshore electricity comprising:
- a wind turbine (12), and
- a monopile (14) extending along an axis (V) intended to be vertical, and adapted for fully supporting the wind turbine (12), the monopile (14) comprising a lower end (38) adapted for penetrating in a seabed (16), the lower end (38) comprising an outer tube (52) centered on the axis (V) and defining an interior volume (54) of the monopile (14),
the lower end (38) further comprising:
- an inner tube (56) centered on the axis (V) and extending in the interior volume (54), the inner tube (56) defining a lower opening (58) perpendicular to the axis (V), and the inner tube (56) and the outer tube (52) defining an annular volume (68),
- a closure plate (60) welded on the inner tube (56) and closing the lower opening (58), and
- a plurality of wing plates (62) extending in the annular volume (68) and welded on the inner tube (56) and on the outer tube (52), the wing plates (62) defining a plurality of compartments (70) in the annular volume (68), the compartments (70) respectively extending along the axis (V) and defining lower entries (72) adapted for allowing part of the seabed (16) to enter the compartments (70).

2. The assembly (10) according to claim 1, wherein the wing plates (62) respectfully extend in radial planes (74) with respect to the axis (V) and are regularly distributed around the axis (V).

3. The assembly (10) according to claim 1 or 2, wherein said plurality of wing plates (62) consists of a number of wing plates (62) ranging from four to eight.

4. The assembly (10) according to any one of claims 1 to 3, wherein each of the wing plates (62) comprises a lowermost edge (76) and an uppermost edge (78) both connecting the outer tube (52) to the inner tube (56), the lowermost edge (76) and the uppermost edge (78) being inclined with respect to the axis (V), and getting lower towards the inner tube (56).

5. The assembly (10) according to any one of claims 1 to 4, wherein the outer tube (52) has a radial thickness (E1), the wing plates (62) having a thickness (E2) comprised between 40% and 60% of the radial thickness (E1) of the outer tube (52).

6. The assembly (10) according to any one of claims 1 to 5, wherein the inner tube (56) has an outside diameter (D2) and the outer tube (52) has an outside diameter (D1), the outside diameter (D2) of the inner tube (56) being comprised between 25% and 75% of the outside diameter (D1) of the outer tube (52).

7. The assembly (10) according to claim 6, wherein the inner tube (56) has an axial extension (H2) which is smaller than the outside diameter (D1) of the outer tube (52).

8. The assembly (10) according to any one of claims 1 to 7, wherein the closure plate (60) has a circular shape.

9. The assembly (10) according to any one of claims 1 to 8, wherein the inner tube (56) defines an inner volume (66), the lower end (38) further comprising stiffening elements (64) located in the inner volume (66) and adapted for stiffening the closing plate (60) with respect to compression along the axis (V) and bending.

10. The assembly (10) according to claim 9, wherein the stiffening elements (64) comprise plates (80) extending throughout the inner volume (66) and forming a grid in axial view.

11. The assembly (10) according to any one of claims 1 to 10, wherein the inner tube (56), the outer tube (52), the wing plates (62) and the closure plate (60) comprise steel having a yield strength larger than 355 MPa.

12. The assembly (10) according to any one of claims 1 to 11, further including a subsea jacket (18) comprising:
- a structure (20) adapted for being anchored in the seabed (16) and surrounding the monopile (14) around the axis (V), and
- a central guide (22) fixed on the structure (20) and surrounding the monopile (14) around the axis (V) while being vertically free with respect to the monopile (14), the structure (20) being adapted for resisting horizontal loads (F2) applied by the monopile (14) on the central guide (22) due to bending movements of the monopile (14).

13. The assembly (10) according to claim 12, wherein the jacket (18) further comprises a lower central guide (40) fixed on the structure (20) and surrounding the monopile (14) around the axis (V) while being vertically free with respect to the monopile (14), the structure (20) being adapted for resisting horizontal loads (F3) applied by the monopile (14) on the lower central guide (40).

14. The assembly (10) according to claim 12 or 13, wherein the central guide (22) comprises:
- a ring (48) surrounding the monopile (14) with clearance, and
- a plurality of friction pads (50) located between the ring (48) and the monopile (14) and angularly distributed around the axis (V).

15. A process for building an assembly (10) according to any one of claims 1 to 14, comprising the following steps:
- obtaining the outer tube (52) and the inner tube (56),
- positioning the inner tube (56) in the interior volume (54) defined by the outer tube (52), the outer tube (52) being horizontal, and the inner tube (56) being centered on the axis (V), and
- welding the wing plates (62) on the inner tube (56) and on the outer tube (52), and welding the closure plate (60) on the inner tube (56).
